(19) Europäisches Patentamt
European Patent Office
Office européen des brevets

(11) Veröffentlichungsnummer : **0 457 713 A2**

## (12) EUROPÄISCHE PATENTANMELDUNG

(21) Anmeldenummer : **91810082.7**

(51) Int. Cl.$^5$ : **B65G 1/06**

(22) Anmeldetag : **06.02.91**

(30) Priorität : **18.05.90 DE 4015949**

(43) Veröffentlichungstag der Anmeldung :
**21.11.91 Patentblatt 91/47**

(84) Benannte Vertragsstaaten :
**AT BE CH DE DK ES FR GB GR IT LI LU NL SE**

(71) Anmelder : **CATRAK AG**
**Birsweg 1**
**CH-4253 Liesberg (CH)**

(72) Erfinder : **Dreier, Erich**
**Büntenweg 527**
**CH-4245 Kleinlützel (CH)**

(74) Vertreter : **Rottmann, Maximilian R.**
**c/o Rottmann, Zimmermann + Partner AG**
**Glattalstrasse 37**
**CH-8052 Zürich (CH)**

(54) **Verfahren zum Positionieren eines Regalbedienungsgeräts und Regallager-Anlage mit einem Zwangspositionierten Regalbedienungsgerät.**

(57)    Zum niveaugerechten Positionieren einer höhenverstellbaren Plattform (7) eines Regalbedienungsgerätes (6) einer Regallager-Anlage wird die Plattform über das vorgegebene Sollniveau gefahren und anschliessend mit einem Stössel (13) gegen einen das Sollniveau markierenden Anschlag (15) gesenkt. Mit dem Stössel (13) auf dem Anschlag aufliegend erfolgt das Ein- oder Ausladen mittels eines Übernahmegerätes (8). Dieses ist mit einem teleskopisch ein- und ausfahrbaren Tragarm (9) versehen, der einen Rolluntersatz (2) zu untergreifen und diesen hochzuheben bestimmt ist.

Damit wird eine sehr exakte Ausrichtung des Übernahmegerätes (8) in der richtigen Höhenstellung erzielt und ermöglicht, dass eine sehr rasche Ein- und Auslagerung von Gütern realisiert werden kann.

EP 0 457 713 A2

FIG. 2

Die vorliegende Erfindung bezieht sich auf ein Verfahren zum niveaugerechten Positionieren eines höhenverstellbaren Regalbedienungsgerätes sowie auf eine Regallager-Anlage, welche ein bezüglich der höhenlage zwangspositioniertes Regalbedienungsgerät aufweist.

Es sind Regallager-Anlagen bekannt, bei welchen die zu lagernden Güter auf Rolluntersätzen in mit Schienen ausgerüsteten Regalfächern untergebracht sind. Entlang der Entnahmeseite der Regalfächer ist im allgemeinen ein Regalbedienungsgerät mit einem Übernahmegerät zum wahlweisen Bedienen der neben und übereinander angeordneten Regalfächer vorgesehen. Die Bedienung der Regalfächer, d.h. die Ein- und Auslagerung der beladenen Rolluntersätze, erfolgt dann mittels des Übernahmegerätes, welches einen oder zwei in horizontaler Richtung teleskopisch ein- und ausfahrbare(n) Tragarm(e) aufweist, der bzw. die zum Untergreifen der beladenen, sich in den Regalfächern bzw. auf dem Übernahmegerät befindlichen Rolluntersätze bestimmt ist.

Die einzelnen Regalfächer weisen oft mit Gefälle behaftete Schienen auf, auf denen die Rolluntersätze gegen das Regalfach-Ende laufen, wobei zum Verhindern eines Überfahrens des Schienenendes und damit eines Herausfallens des Rolluntersatzes aus dem Regalfach Anschläge vorhanden sein müssen. Diese erschweren aber das Entnehmen eines Rolluntersatzes aus dem Regalfach, weil der Rolluntersatz logischerweise über den Endanschlag gehoben werden muss. Um dies zu erreichen, muss zunächst der teleskopisch ein- und ausfahrbare Tragarm so positioniert sein, dass er exakt im Zwischenraum zwischen Unterseite des Rolluntersatzes und dem Boden des Lagerfaches ausgefahren werden kann. Ferner ist es dann notwendig, das gesamte Übernahmegerät etwas anzuheben, um den Rolluntersatz über den Endanschlag hinwegzubringen.

Die praktische Ausführung dieser Manövriertätigkeit ist jedoch mit gewissen Schwierigkeiten verbunden. Zunächst ist es nicht einfach, die meistens an Seilen aufgehängte Konstruktion der höhenverschiebbaren Plattform in die richtige Lage zu bringen, welche der Sollniveaustellung entspricht, das heisst in eine Lage, bei welcher der Tragarm des Übernahmegerätes ausgefahren werden kann, ohne auf Hindernisse zu stossen, da die Seile eine gewisse Elastizität aufweisen. Der erwähnte Zwischenraum ist sehr knapp und es steht nur sehr wenig Zeit zum Manövrieren zur Verfügung, da das Ein- und Auslagern sehr schnell vor sich gehen muss.

Eine weitere Schwierigkeit bietet das Anheben des Tragarmes, bei welchem Vorgang das Übernahmegerät aus der Sollniveaustellung gehoben und anschliessend wieder in die Sollniveaustellung gesenkt werden muss. Die diesbezüglichen Vorgänge können ebenfalls nur mit grösserem konstruktiven Aufwand verwirklicht werden.

Aufgabe der vorliegenden Erfindung ist zunächst, ein Verfahren vorzuschlagen, mittels welchem die Einstellung des Übernahmegerätes auf Sollniveau mit sehr wenig Aufwand und trotzdem sehr exakt erfolgen kann, und ferner, bei welchem zum Ein- und Auslagern der Rolluntersätze die einmal eingenommene Niveaustellung nicht verändert werden muss.

Zu diesem Zwecke wird das in den Ansprüchen 1 und 2 näher definierte Verfahren vorgeschlagen.

Zur Ausübung des Verfahrens eignet sich eine Regallager-Anlage, welche die im Anspruch 3 aufgeführten Merkmale aufweist. Weitere vorteilhafte Ausbildungen sind in den Ansprüchen 4 - 7 beschrieben.

Auf beiliegenden Zeichnungen ist ein Ausführungsbeispiel des Erfindungsgegenstandes dargestellt, welches auch zur Erläuterung des vorgeschlagenen Verfahrens dient. Es zeigen

Fig. 1 eine perspektivische Ansicht der allgemeinen Anordnung einer Regallager-Anlage;

Fig. 2 das Endstück der Schienenfahrbahn eines Regalfaches mit einem Regalbedienungsgerät, und

Fig. 3 eine Variante als Einzelheit.

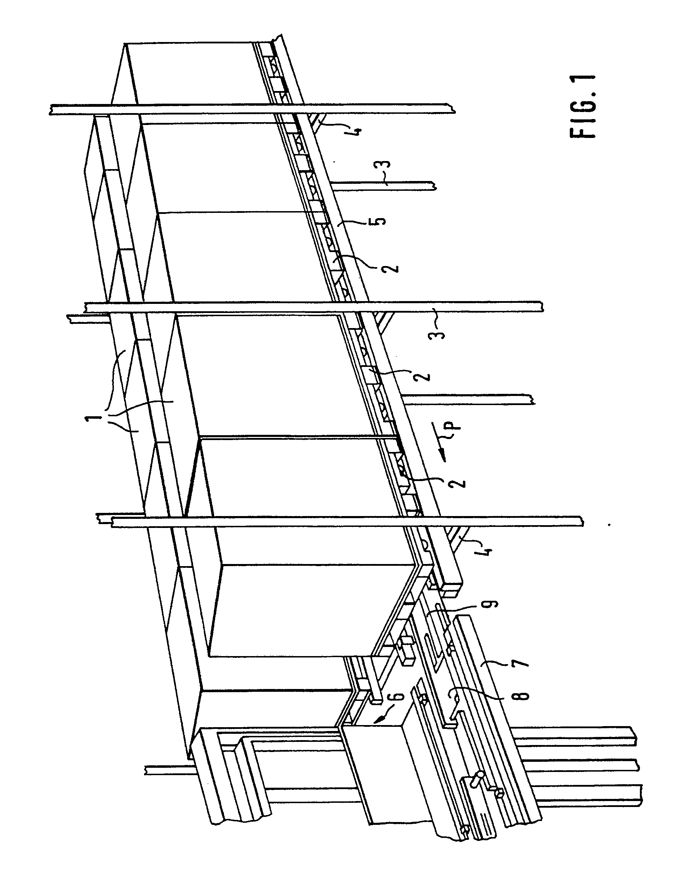

Die Regallager-Anlage gemäss Fig. 1 weist ein Lagergestell auf, welches zur Aufnahme von mit Gütern 1 beladenen Rolluntersätzen 2 bestimmt ist. Das Gestell ist mit vertikalen Stützträgern 3 ausgerüstet, die zur Abstützung von horizontal verlaufenden Querträgern 4 dienen. Auf diesen liegen Schienen 5 auf, die zweckmässigerweise ein leichtes Gefälle in der Grös- senordnung von 0.5% in der Pfeilrichtung P besitzen, so dass die Rolluntersätze 2 bestrebt sind, selbsttätig gegen die in Fig. 1 links liegende Entnahmeseite des Regalfaches zu rollen. Grundsätzlich ist es aber nicht unbedingt erforderlich, ein Gefälle vorzusehen, da andere Mittel vorgesehen sein können, um die mit Gütern 1 beladenen Rolluntersätze bis zum Ende des Lagerfachs zu fördern.

Das Überfahren des Schienenendes wird jedenfalls mit Hilfe von Anschlägen verhindert, die im Bereiche des Schienenendes, aber ausserhalb der Schiene selbst, seitlich angeordnet sind und gegen welche der vordere Querträger des Rolluntersatzes 2 anstösst.

Auf der Entnahmeseite der Regalfächer ist ein Regalbedienungsgerät 6 angeordnet, welches eine in der Höhe verstellbare Plattform und auf dieser ein Übernahmegerät 8 mit teleskopisch ein- und ausfahrbaren Tragarm 9 zum Untergreifen eines Rolluntersatzes 2 aufweist, wie dies später noch näher beschrieben wird.

Die fahrbaren Lager- und Transporteinheiten, d.h. die fahrbaren Rolluntersätze 2, bewegen sich unter Wirkung der Schwerkraft oder mit Hilfe von Fördermitteln gegen das offene Ende des Regals und werden dort durch die erwähnten Anschläge aufgehalten. Anschliessend erfolgt die Entnahme der gelagerten Güter von diesem tiefer gelegenen Ende der Regalschienen aus.

Wie erwähnt ist es natürlich möglich, die Schienen 5 exakt horizontal zu verlegen und andere Mittel zum Bewegen der beladenen Rolluntersätze zu verwenden. Aber auch bei horizontalen Schienen müssen aus Sicherheitsgründen im Bereiche der Schienenenden Anschläge vorhanden sein. Die Entnahme der beladenen Rolluntersätze 2 erfolgt in bekannter Weise so, dass das Regalbedienungsgerät 6 mit Übernahmegerät 8 exakt vor das entsprechende Schienenpaar 5 dirigiert wird, auf welchem der zu entnehmende Rolluntersatz 2 zuvorderst steht. Dazu ist es notwendig, dass das Übernahmegerät 8 genauestens die Höhe einnimmt, bei welcher der teleskopisch ausfahrbare Tragarm 9 desselben in den Zwischenraum zwischen der Unterseite des Rolluntersatzes 2 und den Querträgern 4 eindringen kann. Anschliessend wird das Übernahmegerät 8 angehoben, so dass der sich auf dem Tragarm 9 befindliche, beladene Rolluntersatz 2 über die Anschläge gehoben und anschliessend durch Einziehen des teleskopisch ausfahrbaren und einziehbaren Tragarmes 9 auf die Plattform 7 gebracht wird. Da zwischen der Unterseite des Rolluntersatzes 2 und den Querträgern 4 im Interesse einer optimalen Ausnutzung der Höhe des gesamten Lagers nur wenig Platz zur Verfügung steht, muss das Übernahmegerät 8 des Regalbedienungsgerätes 6 mit äusserster Präzision in die vorgesehen Höhenlage gebracht und dort festgehalten werden. Um das Risiko eines Zusammenstosses des teleskopisch ausfahrenden Tragarmes 9 mit dem Rolluntersatz 2 oder mit einem Querträger 4 zu vermeiden oder möglichst gering zu halten, durfte bisher der Tragarm 9 nur sehr langsam ausgefahren werden, wobei unter Umständen eine Sicherung eingebaut werden musste, welche beim Anstossen die Ausstossbewegung des Tragarmes aufhält.

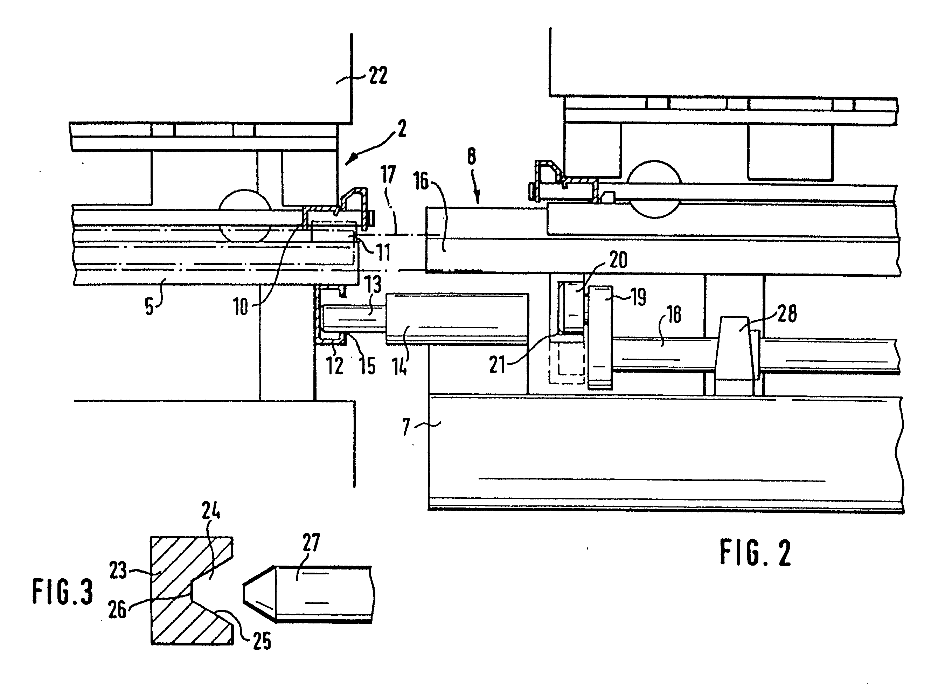

Um alle diese Nachteile zu vermeiden, werden gemäss der vorliegenden Erfindung die in den Ansprüchen definierten und in den Figuren 2 und 3 dargestellten Vorkehrungen getroffen.

Auf der linken Seite der Fig. 2 ist wiederum ein Lagergestell in Seitenansicht ersichtlich, wobei nur ein Fach teilweise dargestellt ist, in welchem auf Schienen 5 ein Rolluntersatz 2 die äusserste Stellung einnimmt. Die vordere Quertraverse 10 des Rolluntersatzes 2 stösst gegen die seitlich der Schienen 5 angeordneten Endanschläge 11.

Unterhalb der Schienen 5 ist eine im Querschnitt im wesentlichen C-förmige Quertraverse 12 angeordnet, welche mit ihrer Öffnung der Entnahmeseite des Gestells zugewandt ist. Mit der Quertraverse 12 arbeitet der ein- und ausziehbare Stössel 13 eines Niveaureglers 14 zusammen, der auf der Plattform 7 des Übernahmegerätes 8 angebracht ist. Die Anordnung ist dabei so getroffen, dass beim Aufliegen des Stössels 13 auf die untere Kante 15 der Quertraverse 12 das auf der Plattform 7 angeordnete Übernahmegerät 8 die exakte Höhenlage einnimmt, welche zum ungehinderten Ausfahren des Tragarmes 17 und zum Ergreifen des Rolluntersatzes 2 erforderlich ist.

Das Übernahmegerät 8 weist eine hebebühnenartig heb- und senkbare Platte 16 auf, welche mit dem ausfahrbaren Tragarm 17 versehen ist. Zum Heben und Senken der Platte 16 ist diese auf zwei parallen Wellen 18 (in der Zeichnung nur eine ersichtlich) mit Hilfe von je zwei Exzenterscheiben 19 gelagert, wobei die eine exzentrisch angeordnete Rolle 20 der Exzenterscheibe in eine auf der unteren Seite der Platte 16 angebrachte Führung 21 eingreift. Die Wellen 18 führen eine hin- und hergehende Drehung aus, wobei die diesbezüglichen Mittel als bekannt angesehen werden können und in der Zeichnung nicht näher dargestellt sind. Die in der Fig. 2 gezeigte Stellung der Platte 16 ist die obere Stellung, aus welcher heraus sie in eine niedrigere Stellung gesenkt werden kann, in welcher der Tragarm 17 ausgestossen wird und unter den Rolluntersatz 2 greift. Diese Stellung ist strichpunktiert dargestellt. Die gesenkte Stellung der Führung 21 ist ebenfalls aus der Fig. 2 (strichpunktiert gezeichnet) ersichtlich. Zur Lagerung jeder der Wellen 18 sind je zwei Lagerstellen 28 vorhanden, von welchen in der Zeichnung nur eine dargestellt ist.

Bei der beschriebenen Regallager-Anlage sind die zu lagernden Güter 22 auf den erwähnten Rolluntersätzen 2 im Lagergestell untergebracht, wobei die Rolluntersätze auf den horizontalen oder mit 0.5% Gefälle verlegten Schienen 5 geführt sind. Am Ende der Schienen an der Entnahmeseite sind die Endanschläge 11 angeordnet, welche ein Überrollen dieser Stelle zu- verlässig verhindern.

Zur Entnahme des vordersten, beim Endanschlag aufgehaltenen Rolluntersatzes 2, welcher mit Gütern 22 beladen ist, dient das Regalbedienungsgerät 8, welche in bekannter Weise höhenverstellbar ist. Diese Höhenverstellung kann aufzugartig mittels Seilen erfolgen, oder aber durch andere an und für sich bekannte Mittel.

Gemäss dem vorgeschlagenen Verfahren kann jetzt so vorgegangen werden, dass das Regalbedienungsgerät samt Plattform soweit hochgefahren wird, dass der Stössel 13, welcher noch eingezogen ist, sich geringfügig über dem Sollniveau befindet. Dieses Sollniveau wird durch die untere Kante 15 der Quertraverse 12 markiert und kann auf der starren Regallager-Anlage praktisch millimetergenau bestimmt werden. Die Plattform 7 wird also soweit hochgefahren, dass der ausgefahrene Stössel 13 in die im Querschnitt ungefähr C-förmige Führung 12 eindringen kann. Anschliessend wird das Regalbedienungsgerät 6 samt Plattform 7 etwas entlastet oder nach abwärts bewegt, bis der Stössel 13 auf die Kante 15 der Quertraverse 12 zur Auflage kommt. In diesem Moment hat die Plattform 7 die Sollstellung erreicht. Zur Sicherung dieser Stellung kann natürlich ein Berührungskontakt vorgesehen sein, welcher die Senkbewegung der Plattform 7 aufhält und diese in der kontaktierten Stellung arretiert. Anschliessend kann das Ein- oder Ausladen eines Rolluntersatzes 2 erfolgen. Zu diesem Zwecke wird der Tragarm 17 ausoder eingefahren. Dies kann ohne Bedenken und ohne Risiko durch eine sehr schnelle Bewegung erfolgen, da die gegenseitige Lage des Lagergestells und der Plattform 7 einwandfrei festgestellt und gesichert wurde.

Im Gegensatz zu den sonst üblichen Ausführungen wird zum Anheben des Rolluntersatzes 2 die Höhenlage der Plattform 7 nicht verändert. Diese bleibt in der verriegelten Stellung und das Anheben des Tragarmes 17 samt Rolluntersatz 2 erfolgt durch die Drehbewegung der Welle 18, welche mit Hilfe der Exzenterscheiben 19 und Rollen 20 die Platte 16 hebebühnenartig auf die gewünschte Höhe bringt. Diese Huboder Senkbewegung kann ohne Probleme millimetergenau mit der gewünschten Präzision erfolgen. Der Tragarm 17 wird eingezogen, wobei der Rolluntersatz 2 über die Endanschläge 11 bewegt wird und in die auf der rechten Seite der Fig. 2 gezeigte Stellung gelangt. Anschliessend wird die Plattform 7 etwas angehoben, der Stössel 13 eingezogen und das Regalbedienungsgerät 6 in Tätigkeit gesetzt. Der Rolluntersatz 2 wird zusammen mit den aufgeladenen Gütern an den Bestimmungsort gebracht und dort wieder in der beschriebenen Weise eingelagert oder einer weiteren Verarbeitung zugeführt.

Gemäss einer Variante kann anstelle der Quertraverse 12 eine ähnliche, mit einer konischen Ausnehmung versehene Führung verwendet werden, welche aus der Fig. 3 ersichtlich ist. Es handelt sich hier um eine Traverse 23, welche mit einer Ausnehmung 24 versehen ist, die durch zwei konisch zusammenlaufende Wände 25 sowie durch eine Stirnwand 26 begrenzt ist. Der Stössel 27, welcher dem Stössel 13 entspricht, weist ein in die Ausnehmung 25 passendes Ende 28 auf. Beim Ausfahren des Stössels 27 wird dieser bei entlasteter Plattform 7 zentriert, wobei die zentrierte Lage dem Sollniveau entspricht. Auch hier kann durch Berührungskontakte eine Arretierung leicht erreicht werden. Der Vorteil dieser Lösung liegt darin, dass die theoretische Sollposition bezüglich der Höhenlage nur ungefähr angefahren werden muss, weil durch das Zusammenwirken des konischen Endes des Stössels 27 mit den konisch verlaufenden Wänden 25 eine zwangsläufige Höhenzentrierung der Plattform auch dann erfolgt, wenn die Plettform etwas zu tief steht.

Es ist selbstverständlich, dass die erwähnte Ausführung auch so ausgebildet werden kann, indem die Quertraverse 12 bzw. die Traverse 23 auf der Plattform 7 und der Niveauregler 14 mit Stösseln 13 bzw. 27 am Regal angeordnet werden.

## Patentansprüche

1. Verfahren zum niveaugerechten Positionieren eines Regalbedienungsgerätes (6), welches eine höhenverstellbare Plattform (7) zum wahlweisen Bedienen von neben- und übereinander angeordneten Fächern eines Lagergestells mit beladenen Rolluntersätzen (2) mittels eines auf der Plattform (7) angeordneten Übernahmegerätes (8) aufweist, wobei die Plattform (7) in den Bereich eines Sollniveaus gefahren, anschliessend gegenüber einem das Sollniveau markierenden Anschlagorgan (15, 25) zentriert positioniert und damit bezüglich seiner Höhenlage verriegelt wird, dadurch gekennzeichnet, dass die Plattform (7) über ein vorgegebenes Sollniveau gefahren und anschliessend gegen das das Sollniveau markierende Anschlagorgan (15, 25) gesenkt und auf diesem aufliegend positioniert wird, worauf das Ein- oder Auslagern von Rolluntersätzen (2) mittels des Übernahmegerätes (8) erfolgt.

2. Verfahren nach Anspruch 1, dadurch gekennzeichnet, dass zum Ein- und Auslagern eines beladenen Rolluntersatzes (2) dieser gegenüber der auf dem Anschlag (15, 25) aufliegenden oder im Anschlag zentrierten Plattform (7) hochgehoben, aus dem Bereich der Lagerfächer zur Plattform oder umgekehrt verschoben und schliesslich gesenkt wird.

3. Regallager-Anlage, bei der die zu lagernden Güter auf Rolluntersätzen (2) in mit Schienen (5) ausgerüsteten Lagerfächern eines Lagergestells untergebracht sind, mit einem entlang der Entnahmeseite der Regalfächer wenigstens in der Höhe verstellbaren, eine Plattform (7) aufweisenden Regalbedienungsgerät (6) zum wahlweisen Bedienen der neben- und übereinander angeordneten Regalfächer mit Hilfe eines auf der Plattform (7) angeordneten Übernahmegerätes (8), das einen teleskopisch ein- und ausfahrbaren Tragarm (9) zum Untergreifen des Rolluntersatzes (2) aufweist, dadurch gekennzeichnet, dass im Bereiche der Entnahmeseite jedes der Regalfächer mindestens ein Anschlag (12, 23) angeordnet ist, welcher das Sollniveau zum Bedienen eines Regalfaches markiert, welcher Anschlag (15, 25) mit einem an der Plattform angeordneten Gegenstück (13) zusammenzuwirken bestimmt ist, indem dasselbe in der vorbestimmten Stellung zum Bedienen eines Lagerfaches sich gegen den Anschlag (15, 25) abstützt oder in diesem zentriert wird.

4. Regallager-Anlage nach Anspruch 3, dadurch gekennzeichnet, dass der Anschlag als profilierte Traverse (12) mit einer als Niveaufläche ausgebildeten Auflage (15) ausgebildet ist, in welche als Gegenstück ein teleskopisch ein- und ausfahrbarer Stössel (13) einzudringen und sich auf der Auflage abzustützen bestimmt ist.

5. Regallager-Anlage nach Anspruch 4, dadurch gekennzeichnet, dass die Traverse (23) eine Längsausnehmung (24) mit konisch zusammenlaufenden Wänden (25) und mit senkrechter, nach innen versetzter Innenwand (26) aufweist, welche Ausnehmung (24) zum Zentrieren des eingeführten Stössels (27) in der Soll-Niveaustellung bestimmt ist.

6. Regallager-Anlage nach den Ansprüchen 3 und 4 oder 5, dadurch gekennzeichnet, dass das Übernahmegerät (8) auf einer hebebühnenartig heb- und senkbaren Platte (16) angeordnet ist.

7. Regallager-Anlage nach Anspruch 6, dadurch gekennzeichnet, dass die Platte (16) mit Hilfe von auf zwei drehbaren, angetriebenen, parallelen Wellen (18) angeordneten Exzenterscheiben (19) gelagert ist, wobei jede Exzenterscheibe (19) eine exzentrisch angebrachte Rolle (20) trägt, die in eine auf der Platte (16) angebrachte Führung (21) greift.

FIG. 1

FIG. 2

FIG. 3

EP 0 457 713 A2